# EUROPÄISCHE PATENTANMELDUNG

(11) **EP 4 732 939 A1**
(43) Veröffentlichungstag der Anmeldung: **29.04.2026**
(21) Anmeldenummer: 25210884.0
(22) Anmeldetag: 23.10.2025
(51) Int. Cl.: B01F 23/213, B01F 25/314, B01F 25/432, B01F 25/433, F01N 3/10

(54) **MISCHVORRICHTUNG ZUM EINMISCHEN EINES REAKTIONSMEDIUMS IN EINEN GASSTROM, ABGASPFAD MIT EINER SOLCHEN MISCHVORRICHTUNG UND BRENNKRAFTMASCHINE**

(30) Priorität: 24.10.2024 DE 102024131111; 10.09.2025 DE 102025136556
(71) Anmelder: Rolls-Royce Solutions GmbH, 88045 Friedrichshafen (DE)
(72) Erfinder: Rogowski, Igor, 88213 Ravensburg (DE); Reich, Anton, 87437 Kempten (DE); Notter, Felix, 78467 Konstanz (DE); Holstein, Andreas, 88677 Markdorf (DE)
(74) Vertreter: Gleiss Große Schrell und Partner mbB

(57) **Zusammenfassung**

Die Erfindung betrifft eine Mischvorrichtung (1) zum Einmischen eines Reaktionsmediums in einen Gasstrom, wobei
- die Mischvorrichtung (1) ein Strömungsgehäuse (3) aufweist, das eine Längsachse (L) und eine Einlasswandung (5) mit einer Einlassöffnung (7) für den Gasstrom aufweist, wobei
- die Einlassöffnung (7) derart relativ zu der Längsachse (L) angeordnet ist, dass eine Einströmrichtung (SR) des Gasstroms mit der Längsachse (L) einen ersten endlichen Winkel (α) einschließt, wobei
- in dem Strömungsgehäuse (3) der Einlassöffnung (7) entlang der Einströmrichtung (SR) gegenüberliegend ein Verwirbelungselement (9) angeordnet ist, wobei
- das Verwirbelungselement (9) derart angeordnet ist, dass ein erster Strömungspfad (S1) für den Gasstrom in dem Strömungsgehäuse (3) auf einer der Einlassöffnung (7) zugewandten Seite des Verwirbelungselements (9) gebildet ist, wobei ein zweiter Strömungspfad (S2) für den Gasstrom in dem Strömungsgehäuse (3) auf einer der Einlassöffnung (7) abgewandten Seite des Verwirbelungselements (9) gebildet ist, wobei
- die Mischvorrichtung (1) mindestens eine Dosiervorrichtung (11) zur Eindosierung des Reaktionsmediums in das Strömungsgehäuse (3) aufweist, und wobei
- die mindestens eine Dosiervorrichtung (11) angeordnet und eingerichtet ist, um das Reaktionsmedium entlang einer Eindosierrichtung (DR) einzudosieren, die schräg zu der Einströmrichtung (SR) und schräg zu der Längsachse (L) angeordnet ist.

## Beschreibung

Die Erfindung betrifft eine Mischvorrichtung zum Einmischen eines Reaktionsmediums in einen Gasstrom, einen Abgaspfad für eine Brennkraftmaschine mit einer solchen Mischvorrichtung und eine Brennkraftmaschine mit einer solchen Mischvorrichtung oder einem solchen Abgaspfad.

Beim Einmischen von Reaktionsmedien in Gasströme mittels einer Mischvorrichtung besteht die Anforderung, auf möglichst kleinem Bauraum - insbesondere mit möglichst kurzer Mischstrecke - eine möglichst homogene Durchmischung zu erreichen. Sind dabei zusätzliche Anforderungen zu erfüllen, wie beispielsweise flüssige Reaktionsmedien zu verdampfen oder chemisch aktive Reaktionsmedien zur Reaktion zu bringen, beispielsweise weil eine Vorstufe eines Reagenz in den Gasstrom eingebracht wird, die erst in Kontakt mit dem Gasstrom zu dem Reagenz umgesetzt wird, wird außerdem eine möglichst vollständige Aufbereitung im Sinne einer Verdampfung und/oder Reaktion angestrebt. Des Weiteren sollen Ablagerungen des Reaktionsmediums an Wandungen einer solchen Mischvorrichtung zumindest weitgehend vermieden werden. Weiterhin weisen bekannte Mischvorrichtungen typischerweise einen unerwünscht hohen Strömungswiderstand und damit Gegendruck auf, und/oder sie sind bezüglich ihrer Herstellungskosten verbesserungsfähig.

Der Erfindung liegt daher die Aufgabe zugrunde, eine Mischvorrichtung zum Einmischen eines Reaktionsmediums in einen Gasstrom, einen Abgaspfad für eine Brennkraftmaschine mit einer solchen Mischvorrichtung und eine Brennkraftmaschine mit einer solchen Mischvorrichtung oder einem solchen Abgaspfad zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere in einem ersten Aspekt gelöst, indem eine Mischvorrichtung zum Einmischen eines Reaktionsmediums in einen Gasstrom geschaffen wird, wobei
- die Mischvorrichtung ein Strömungsgehäuse aufweist, das eine Längsachse und eine Einlasswandung mit einer Einlassöffnung für den Gasstrom aufweist, wobei
- die Einlassöffnung derart relativ zu der Längsachse angeordnet ist, dass eine Einströmrichtung des Gasstroms mit der Längsachse einen ersten endlichen Winkel einschließt, wobei
- in dem Strömungsgehäuse der Einlassöffnung entlang der Einströmrichtung gegenüberliegend ein Verwirbelungselement angeordnet ist, wobei
- das Verwirbelungselement derart angeordnet ist, dass ein erster Strömungspfad für den Gasstrom in dem Strömungsgehäuse auf einer der Einlassöffnung zugewandten Seite des Verwirbelungselements gebildet ist, wobei ein zweiter Strömungspfad für den Gasstrom in dem Strömungsgehäuse auf einer der Einlassöffnung abgewandten Seite des Verwirbelungselements gebildet ist, wobei
- die Mischvorrichtung mindestens eine Dosiervorrichtung zur Eindosierung des Reaktionsmediums in das Strömungsgehäuse aufweist, und wobei
- die mindestens eine Dosiervorrichtung angeordnet und eingerichtet ist, um das Reaktionsmedium entlang einer Eindosierrichtung einzudosieren, die schräg zu der Einströmrichtung und schräg zu der Längsachse angeordnet ist.

Vorteilhaft kann die hier vorgeschlagene Mischvorrichtung durch die Umlenkung der Gassströmung von der Einströmrichtung in eine entlang der Längsachse ausgerichtete Hauptströmungsrichtung, bei welcher die Gasströmung durch das Verwirbelungselement verwirbelt wird, sowie durch die Eindosierung des Reaktionsmediums schräg zu der Einströmrichtung und schräg zu Längsachse einen besonders kleinen Bauraum, insbesondere eine besonders kurze Mischstrecke, bei zugleich sehr guter Durchmischung und Aufbereitung des Reaktionsmediums aufweisen. Indem außerdem der zweite Strömungspfad gleichsam auf der Rückseite des Verwirbelungselements bereitgestellt wird, kann das Verwirbelungselement durch den typischerweise heißen Gasstrom auf seiner Rückseite sehr effektiv und schnell erwärmt werden, wodurch Ablagerungen des Reaktionsmedium auf dem Verwirbelungselement wirksam vermieden werden. Insbesondere sorgt die Ausrichtung der Eindosierrichtung schräg zur Längsachse dafür, dass ein zumindest hypothetischer Auftreffort des Reaktionsmediums auf eine Wandung der Mischvorrichtung in Richtung des Verwirbelungselements verschoben wird, sodass etwaige Tropfen des Reaktionsmediums auf das Verwirbelungselement treffen und dort verdampfen, da das Verwirbelungselement vorteilhaft durch den rückseitig entlang des zweiten Strömungspfads vorbeiströmenden Anteil des Gasstroms beheizt ist. Zugleich strömt der entlang der Einströmrichtung einströmende Gasstrom an der mindestens einen Dosiervorrichtung vorbei und nimmt dort gebildete Tropfen mit. Die Mischvorrichtung kann weiterhin aus einfachen Gehäuseteilen und insbesondere Blechen kostengünstig hergestellt werden.

Vorzugsweise ist die Eindosierrichtung zumindest komponentenweise entgegen der Einströmrichtung ausgerichtet, das heißt insbesondere schräg in Richtung des einströmenden Gasstroms angestellt oder ausgerichtet.

Die Längsachse ist insbesondere eine gedachte Längsachse des Strömungsgehäuses. Insbesondere ist die Längsachse eine Achse längster Erstreckung des Strömungsgehäuses und/oder eine Symmetrie- und/oder Mittelachse des bevorzugt zumindest im Wesentlichen zylindrischen Strömungsgehäuses. Die Längsachse definiert zugleich die Hauptströmungsrichtung des Gasstroms durch das Gehäuse.

In einer Ausführungsform weist das Strömungsgehäuse eine Auslasswandung mit einer Auslassöffnung auf. In einer Ausgestaltung kann die Auslasswandung senkrecht auf der Längsachse stehen, oder - anders ausgedrückt - ein Auslass-Normalenvektor der Auslasswandung ist parallel zu der Längsachse ausgerichtet. In diesem Fall ist eine Ausströmrichtung der Gasströmung durch die Auslassöffnung vorzugsweise gleich der Hauptströmungsrichtung entlang der Längsachse. In einer anderen Ausgestaltung kann das Strömungsgehäuse eine zusätzliche Strömungsumlenkung aufweisen, wobei der Auslass-Normalenvektor der Auslasswandung und damit zugleich der Auslassöffnung schräg zu der Längsachse orientiert ist.

Die Einströmrichtung des Gasstroms ist diejenige Richtung, in welcher die Gasströmung durch die Einlassöffnung in das Strömungsgehäuse einströmt; insbesondere ist dies die Richtung eines Einlass-Normalenvektors einer von der Einlassöffnung definierten - gedachten - Einlassfläche.

Das Verwirbelungselement ist vorzugsweise als ein Verwirbelungsblech ausgebildet

Der erste Strömungspfad ist vorzugsweise ein Hauptströmungspfad für den Gasstrom, wobei zugleich der zweite Strömungspfad ein Nebenströmungspfad für den Gasstrom ist. Dies bedeutet insbesondere, dass ein größerer Teil, das heißt ein Hauptteil des Gasstroms, entlang des ersten Strömungspfads strömt, wobei ein kleinerer Teil des Gasstroms entlang des zweiten Strömungspfads strömt. Der zweite Strömungspfad dient dabei im Wesentlichen der rückseitigen Erwärmung des Verwirbelungselements und wird daher vorteilhafterweise so bemessen, dass diese Funktion mit Blick auf eine wirksame Vermeidung von Ablagerungen auf dem Verwirbelungselement erfüllt ist, wobei jedoch vorteilhaft kein größerer Anteil des Gasstroms entlang des zweiten Strömungspfads geführt wird, als zur Erfüllung dieser Funktion nötig ist. Demgegenüber dient der erste Strömungspfad der Aufbereitung und Durchmischung des Reaktionsmediums, sodass - ohne Gefährdung der Funktion einer wirksamen Erwärmung des Verwirbelungselements - ein möglichst großer Anteil des Gasstroms entlang des ersten Strömungspfads geführt wird. Wichtig ist allerdings, dass das Gas im Betrieb der Mischvorrichtung - insbesondere strömungstechnisch parallel - entlang beider Strömungspfade strömt.

Mit der Erwärmung des Verwirbelungselements durch den zweiten Strömungspfad wird bei der hier vorgeschlagenen Mischvorrichtung im Unterschied zu bekannten Messvorrichtungen nicht primär versucht, einen Wandkontakt des Reaktionsmediums mit dem Strömungsgehäuses nach Möglichkeit zu vermeiden; vielmehr wird der Wandkontakt beherrscht, indem Ablagerungen durch die Verschiebung des Auftrefforts bei gleichzeitiger Erwärmung des Verwirbelungselements zumindest weitgehend vermieden werden. Dies führt vorteilhaft insbesondere dazu, dass die Mischvorrichtung einen vorteilhaft kleinen Bauraum sowie eine kurze Mischstrecke bei gleichzeitig effektiver Durchmischung und Aufbereitung des Reaktionsmedium aufweisen kann.

Ohne an die Theorie gebunden sein zu wollen führt die Erwärmung des Verwirbelungselements dazu, dass bei Kontakt des Reaktionsmediums mit dem Verwirbelungselement der Leidenfrost-Effekt auftritt, wobei die auftreffenden Tropfen abprallen und dadurch in kleinere Tröpfchen aufgespalten werden, die durch die Strömung weitertransportiert und verdampft werden.

Unter einem Reaktionsmedium wird im Kontext der vorliegenden technischen Lehre insbesondere eine Vorläufersubstanz für ein Reagenz oder ein Reagenz verstanden, welches - insbesondere stromabwärts der Mischvorrichtung - mit mindestens einer Komponente des Gasstroms zur Reaktion gebracht wird, vorzugsweise in einem hierfür eingerichteten Katalysator. Bei dem Katalysator kann es sich insbesondere um einen Oxidationskatalysator oder um einen Katalysator zu selektiven katalytischen Reduktion von Stickoxiden (SCR-Katalysator) handeln. Als das Reaktionsmedium wird entsprechend bevorzugt ein oxidierendes Medium, oder ein Medium, welches selbst unter Reduktion von Bestandteilen des Gasstroms oxidiert wird, oder ein reduzierendes Medium verwendet. In einer Ausgestaltung wird als das Reaktionsmedium Ammoniak oder eine ammoniakhaltige Lösung, oder eine Ammoniak-Vorläufersubstanz oder deren Lösung, vorzugsweise Harnstoff oder eine harnstoffhaltige Lösung, insbesondere eine Harnstoff-Wasser-Lösung, mittels der Dosiervorrichtung in die Mischvorrichtung eindosiert.

Der Gasstrom ist in bevorzugter Ausgestaltung ein Abgasstrom, insbesondere ein Abgasstrom einer Brennkraftmaschine.

In einer Ausführungsform ist die mindestens eine Dosiervorrichtung als Dosierdüse oder Dosierventil ausgebildet.

Das Verwirbelungselement ist bevorzugt relativ zu einer gedachten Mittellinie der Einlassöffnung in Richtung der Längsachse außermittig verschoben angeordnet. Insbesondere erstreckt es sich in Hauptströmungsrichtung gesehen anströmseitig nicht bis zu einem ersten Fluchtpunkt mit einem anströmseitigen Ende der Einlassöffnung, abströmseitig dagegen über einen zweiten Fluchtpunkt mit einem abströmseitigen Ende der Einlassöffnung hinaus. Insbesondere auf diese Weise kann ein Teil der Gassströmung in den zweiten Strömungspfad - insbesondere strömungstechnisch parallel zu dem ersten Strömungspfad - unter oder hinter dem Verwirbelungselement gelangen.

Gemäß einer Weiterbildung der Erfindung ist vorgesehen, dass das Verwirbelungselement derart angeordnet ist, dass der zweite Strömungspfad strömungstechnisch parallel zu dem ersten Strömungspfad ausgebildet ist, sodass der Gasstrom ausgehend von der Einlassöffnung auf den ersten Strömungspfad und den zweiten Strömungspfad aufgeteilt wird. Der Gasstrom strömt also nicht sequenziell zunächst durch den ersten Strömungspfad und danach durch den zweiten Strömungspfad, sondern wird ausgehend von der Einlassöffnung auf einen ersten, entlang des ersten Strömungspfads strömenden Teilstrom und einen zweiten entlang des zweiten Strömungspfads strömenden Teilstrom aufgeteilt, wobei der erste Teilstrom und der zweite Teilstrom parallel zueinander die Strömungspfade durchströmen. Dabei ist der erste Strömungspfad von der Einlassöffnung aus gesehen vor (oder über) dem Verwirbelungselement angeordnet, und der zweite Strömungspfad ist von der Einlassöffnung aus gesehen hinter (oder unter) dem Verwirbelungselement angeordnet. Der Gasstrom kann insbesondere anteilig hinter das Verwirbelungselement gelangen, da dieses wie zuvor erläutert relativ zu der gedachten Mittellinie der Einlassöffnung in Richtung der Längsachse außermittig verschoben angeordnet ist, wobei es sich in Hauptströmungsrichtung gesehen anströmseitig nicht bis zu dem ersten Fluchtpunkt mit dem anströmseitigen Ende der Einlassöffnung erstreckt, sodass hier Freiraum verbleibt, durch den das Gas an dem Verwirbelungselement vorbeiströmen kann.

Die Ausgestaltung trägt vorteilhaft zugleich zu einer effektiven Beheizung des Verwirbelungselements und zu einem geringen Strömungswiderstand und damit geringem Gegendruck bei.

In einer Ausführungsform werden der erste Strömungspfad und der zweite Strömungspfad stromaufwärts der Auslassöffnung des Strömungsgehäuses zusammengeführt. Anders ausgedrückt werden der erste Teilstrom und der zweite Teilstrom vor der Auslassöffnung zu einem Gesamtstrom zusammengeführt und durchströmen die Auslassöffnung gemeinsam als der Gesamtstrom.

Dass eine erste Stelle oder ein erstes Element "stromaufwärts" einer zweiten Stelle oder eines zweiten Elements angeordnet ist, wird im Kontext der vorliegenden technischen Lehre so verstanden, dass ein Volumenelement der Gasströmung zunächst an der ersten Stelle oder dem ersten Element vorbeiströmt und danach an der zweiten Stelle oder dem zweiten Element. Entsprechend wird unter einer Anordnung der ersten Stelle oder des ersten Elements "stromabwärts" der zweiten Stelle oder des zweiten Elements verstanden, dass ein Volumenelement der Gasströmung zunächst an der zweiten Stelle oder dem zweiten Element vorbeiströmt und danach an der ersten Stelle oder dem ersten Element.

Gemäß einer Weiterbildung der Erfindung ist vorgesehen, dass der erste Winkel von 20° bis 110°, vorzugsweise 90° beträgt. Insbesondere in diesen Winkelbereichen kann vorteilhaft eine effektive Verwirbelung der Gasströmung beim Auftreffen auf das und in Kontakt mit dem Verwirbelungselement erreicht werden.

Gemäß einer Weiterbildung der Erfindung ist vorgesehen, dass die Eindosierrichtung mit der Einströmrichtung einen zweiten Winkel von 95° bis 115°, vorzugsweise 100° bis 110°, vorzugsweise 102° bis 106°, vorzugsweise 105°, einschließt. Vorteilhaft erfolgt dabei die Eindosierung nur teilweise entgegen der Einströmrichtung und insbesondere derart, dass an der Dosiervorrichtung gebildete Tropfen des Reaktionsmedium durch die Gasströmung abgelöst und fortgetragen oder wegtransportiert werden.

Alternativ oder zusätzlich ist vorgesehen, dass die Eindosierrichtung mit der Längsachse - und damit der Hauptströmungsrichtung - einen dritten Winkel von 5° bis 25°, vorzugsweise 10° bis 20°, vorzugsweise 15°, einschließt. Vorteilhaft wird insbesondere in diesem Winkelbereich eine Auftreffzone des Reaktionsmedium auf das Verwirbelungselement verlagert, sodass das Reaktionsmedium zumindest nicht primär auf die kühlere Wandung des Strömungsgehäuses sondern auf das über den zweiten Strömungspfad von seiner Rückseite her beheizte Verwirbelungselement auftrifft.

Gemäß einer Weiterbildung der Erfindung ist vorgesehen, dass das Verwirbelungselement angeordnet und ausgebildet ist, um entlang der Längsachse - und damit entlang der Hauptströmungsrichtung - einen gegenläufigen Doppeldrall in dem Gasstrom zu erzeugen. Auf diese Weise kann eine besonders effektive Durchmischung des Reaktionsmediums mit der Gasströmung erreicht werden. Vorteilhaft werden eventuell noch bestehende Konzentrationsunterschiede des Reaktionsmediums durch den Kontakt beider Drallströmungen miteinander in einer gedachten Mittelebene des Doppeldralls ausgeglichen.

Das Verwirbelungselement ist in einer Ausführungsform derart ausgestaltet, dass ein Radius einer einzelnen Drallsströmung des Doppeldralls - insbesondere jeder einzelnen Drallströmung - von 35 % bis 60 %, vorzugsweise 40 % bis 50 %, vorzugsweise 42 % bis 48 %, vorzugsweise 43 % bis 47 %, vorzusehendes 44 % bis 46 %, vorzugsweise 45 %, eines - senkrecht zur Längsachse gemessenen - Breitenmaßes, insbesondere eines Radius des Strömungsgehäuses, beträgt. In einer Ausgestaltung sind die Radien der beiden Drallströmungen gleich, insbesondere identisch.

Alternativ oder zusätzlich weist das Verwirbelungselement eine globale Krümmung auf. Es ist also nicht nur lokal, beispielsweise im Bereich einzelner Verformungen oder Vertiefungen, gekrümmt, sondern insgesamt. Insbesondere weist das Verwirbelungselement eine global gekrümmte Wandung auf oder ist als global gekrümmtes Blech ausgebildet. Ein Krümmungsradius des Verwirbelungselements kann lokal variieren oder global konstant sein. Der Krümmungsradius beträgt vorzugsweise - im Falle einer lokalen Variation optional an jeder Stelle des Verwirbelungselements - von 20 % bis 80 %, vorzugsweise 30 % bis 70 %, vorzugsweise 35 % bis 60 %, vorzugsweise 40 % bis 50 %, vorzugsweise 42 % bis 48 %, vorzugsweise 43 % bis 47 %, vorzusehendes 44 % bis 46 %, vorzugsweise 45 %, des - senkrecht zur Längsachse gemessenen - Breitenmaßes, insbesondere des Radius des Strömungsgehäuses.

Alternativ oder zusätzlich erstrecken sich die Wirbelachsen, das heißt die Rotations- oder Drehachsen, der Drallströmungen zumindest annähernd parallel, vorzugsweise parallel zur Längsachse des Strömungsgehäuses.

Unter einem gegenläufigen Doppeldrall wird im Kontext der vorliegenden technischen Lehre insbesondere eine Strömungsform verstanden, bei der zwei zueinander parallelversetzte Drallströmungen - die jeweils um eine parallel zur Längsachse angeordnete Drehachse rotieren - nebeneinander ausgebildet sind, wobei sich die zueinander senkrecht zur Längsachse parallelversetzten Drehachsen der Drallströmungen in Richtung der Längsachse erstrecken, und wobei die Drehsinne der Drallströmungen einander entgegengerichtet sind, das heißt ein Drehsinn der einen Drallströmung ist - mit Blickrichtung entlang der Längsachse, in Hauptströmungsrichtung - mathematisch negativ, wobei der andere Drehsinn der anderen Drallströmung mathematisch positiv ist.

Insbesondere ist das Verwirbelungselement derart angeordnet und eingerichtet, dass es das Innere des Strömungsgehäuses in jeweils einen Volumenbereich für jede der beiden Drallströmungen unterteilt.

Vorzugsweise sind die beiden Drallströmungen des Doppeldralls jeweils von innen nach außen gerichtet. Dies bedeutet, dass die Gasströmung mittig im Inneren des Strömungsgehäuses auf das Verwirbelungselement trifft, durch dieses in den beiden Drallströmungen radial nach außen umgelenkt wird und seitlich an den Wandungen des Strömungsgehäuses wieder in Richtung der Einlassöffnung - gleichsam zurück nach oben - strömt, wodurch sich der jeweilige Drall ausbildet. Insbesondere ist- mit Blickrichtung entlang der Längsachse, in Hauptströmungsrichtung - der Drehsinn der linken Drallströmung mathematisch negativ, und der Drehsinn der rechten Drallströmung ist mathematisch positiv. Diese Ausgestaltung der Drallströmungen ist insbesondere mit Blick auf einen Gegendruck der Mischvorrichtung besonders günstig, das heißt die derart ausgestaltete Mischvorrichtung weist einen besonders geringen Gegendruck auf.

In einer Ausführungsform ist das Verwirbelungselement angeordnet und ausgebildet, um den gegenläufigen Doppeldrall mit anteilig homogener Aufteilung des Gasstroms zu erzeugen. Vorteilhaft kann auf diese Weise eine besonders gute Homogenisierung des Reaktionsmediums mit der Gasströmung erreicht werden. Unter einer anteilig homogenen Aufteilung des Gasstroms wird dabei im Kontext der vorliegenden technischen Lehre insbesondere verstanden, dass die beiden Drallströmungen einen zumindest im Wesentlichen identischen, vorzugsweise identischen Anteil am Gesamtmassenstrom der Gasströmung führen.

Gemäß einer Weiterbildung der Erfindung ist vorgesehen, dass das Verwirbelungselement in einer Querschnittsebene, auf der die Längsachse - und damit die Hauptströmungsrichtung - senkrecht steht, die Form eines abgerundeten V - eines V mit gekrümmten, insbesondere nach innen eingebauchten, d.h. von außerhalb des V betrachtet konkaven Schenkeln oder Armen - aufweist. Dies stellt eine besonders geeignete Geometrie des Verwirbelungselements zur Erzeugung des Doppeldralls dar. Insbesondere öffnet sich das abgerundete V entlang der - fortgesetzt gedachten - Einströmrichtung; anders ausgedrückt, weist die - bevorzugt ebenfalls abgerundete oder insbesondere dachförmig abgeschrägte - Spitze des V in Richtung der Einlassöffnung, während sich die Arme des V von der Einlassöffnung weg erstrecken. Blickt man also entlang der Längsachse in Hauptströmungsrichtung des Gasstroms und ordnet die Einlassöffnung oben an, hat das Verwirbelungselement in der Querschnittsebene die Form eines umgedrehten, abgerundeten V, bei dem die Spitze nach oben weist - oder, anders ausgedrückt, die Form eines abgerundeten A insbesondere mit zu den Seiten hin sanft auslaufendeninsbesondere konkaven - Armen, beispielsweise wie eine Kinder-Strichzeichnung eines fliegenden Vogels, weshalb das Verwirbelungselement auch als "Vogelblech" bezeichnet wird. Das Verwirbelungselement weist vorzugsweise außerdem eine Geometrie auf, bei der diese Querschnittsform gleichsam senkrecht zu der Querschnittsebene - in Richtung der Längsachse - extrudiert ist.

Alternativ ist vorgesehen, dass das Verwirbelungselement in der Querschnittsebene, auf der die Längsachse - und damit die Hauptströmungsrichtung - senkrecht steht, die Form eines abgerundeten W - eines W mit gekrümmten, insbesondere nach außen ausgebauchten, d.h. von außerhalb des W betrachtet konvexen Schenkeln - aufweist. Auch dies stellt eine besonders geeignete Geometrie des Verwirbelungselements zur Erzeugung des Doppeldralls dar. Insbesondere öffnet sich das abgerundete W entgegen der Einströmrichtung; anders ausgedrückt, weist die - bevorzugt ebenfalls abgerundete oder insbesondere dachförmig abgeschrägte - innere, mittige Spitze des W in Richtung der Einlassöffnung, wobei sich auch die Schenkel des W in Richtung der Einlassöffnung erstrecken. Blickt man also entlang der Längsachse in Hauptströmungsrichtung des Gasstroms und ordnet die Einlassöffnung oben an, hat das Verwirbelungselement in der Querschnittsebene die Form eines aufrecht stehenden, abgerundeten W, bei dem die Spitze und die - insbesondere konkaven - Schenkel nach oben weisen. Das Verwirbelungselement weist vorzugsweise außerdem eine Geometrie auf, bei der diese Querschnittsform gleichsam senkrecht zu der Querschnittsebene - in Richtung der Längsachse - extrudiert ist.

Gemäß einer Weiterbildung der Erfindung ist vorgesehen, dass das Strömungsgehäuse im Bereich der Einlassöffnung mindestens ein Leitblech aufweist. Vorteilhaft kann damit der Gasstrom im Bereich der Einlassöffnung in geeigneter Weise in das Innere des Strömungsgehäuses geleitet werden, wobei er insbesondere zur Erzeugung des Doppeldralls auf das Verwirbelungselement ausgerichtet werden kann.

In einer Ausführungsform weist das Strömungsgehäuse im Bereich der Einlassöffnung zwei sich senkrecht zur Längsachse - und damit senkrecht zur Hauptströmungsrichtung - gegenüberliegende Leitbleche auf. Insbesondere auf diese Weise kann der einströmende Gasstrom mittig auf das Verwirbelungselement geleitet werden, sodass sich der oben beschriebene, von innen nach außen rotierende Doppeldrall einstellen kann.

In einer Ausführungsform ist das mindestens eine Leitblech einteilig, vorzugsweise materialeinheitlich mit dem Verwirbelungselement ausgebildet. Vorzugsweise sind die beiden Leitbleche einteilig, vorzugsweise materialeinheitlich mit dem Verbindungselement ausgebildet. Besonders bevorzugt bilden die - verlängerten - Schenkel des abgerundeten W des Verwirbelungselements die beiden Leitbleche, wobei sie insbesondere zur Mitte hin, das heißt bereichsweise in Richtung der Längsachse, zurückgekrümmt ausgebildet sind.

In einer Ausführungsform ist das Verwirbelungselement mitsamt den einteilig mit ihm ausgebildeten Leitblechen als gebogenes Blech ausgebildet.

In einer anderen Ausführungsform ist das mindestens eine Leitblech mehrteilig mit dem Verwirbelungselement ausgebildet und insbesondere separat von diesem an dem Strömungsgehäuse angeordnet.

In einer Ausführungsform ist das mindestens eine Leitblech derart angeordnet, dass es einen effektiven Einlassquerschnitt für den Gasstrom in Richtung der Längsachse konstant lässt. Vorzugsweise sind die beiden Leitbleche derart angeordnet, dass sie den effektiven Einlassquerschnitt für den Gasstrom in Richtung der Längsachse konstant lassen. Vorteilhaft wird hierdurch eine höhere Strömungsgeschwindigkeit des Gasstroms und damit eine noch weiter verbesserte Durchmischung erreicht, insbesondere im Vergleich zu einer Ausgestaltung, bei der die Leitbleche den effektiven Einlassquerschnitt in Richtung der Längsachse verengen. Eine höhere Strömungsgeschwindigkeit kann außerdem dazu beitragen, die Ausbildung eines permanenten Wandfilms zu verhindern.

In einer Ausgestaltung sind die beiden Leitbleche derart angeordnet und ausgebildet, dass sie den effektiven Einlassquerschnitt für den Gasstrom in Richtung der Längsachse - und damit in Hauptströmungsrichtung - zunehmend verengen. Dies bedeutet insbesondere, dass sich die Leitbleche entlang der Längsachse - in Richtung der Hauptströmung gesehen - einander annähern, oder dass sich - in anderen Worten - ein senkrecht zur Längsachse gemessener Abstand der Leitbleche zueinander entlang der Längsachse verringert. Vorteilhaft bleibt auf diese Weise bei gleichzeitig optimal ausgerichteter Strömung in Richtung des Verwirbelungselements genügend Raum für den Gasstrom, sodass vorteilhaft der Gegendruck der Mischvorrichtung - insbesondere im Vergleich zu einer Ausgestaltung, bei der die Leitbleche den effektiven Einlassquerschnitt konstant lassen - reduziert ist. Außerdem wird der einströmende Gasstrom durch die Verengung vorteilhaft beschleunigt, wenn auch zumindest in Ausgestaltungen weniger stark als bei einer Ausführungsform, bei der der Einlassquerschnitt in Richtung der Längsachse konstant gehalten wird.

Durch die konkrete Ausgestaltung des Abstands zwischen den Leitblechen, optional insbesondere auch der Radien und/oder Konturen der Leitbleche, kann die Strömungsgeschwindigkeit des Gasstroms und insbesondere vorteilhaft die Intensität der Drallströmungen beeinflusst werden.

Alternativ oder zusätzlich zu den beiden Leitblechen weist das Strömungsgehäuse im Bereich der Einlassöffnung als das mindestens eine Leitblech ein - insbesondere genau ein - mittig angeordnetes Leitblech auf. Dieses eine Leitblech ist insbesondere als ein Verteilerblech ausgebildet, welches den einströmenden Gasstrom - vorzugsweise hälftig, das heißt zu gleichen Anteilen - in zwei Teilströme aufgeteilt. In dieser Ausgestaltung kann ein gegenläufiger Doppeldrall erzeugt werden, wobei die Rotationsrichtungen allerdings von außen nach innen gerichtet sind, und wobei der einströmende Gasstrom an den Wandungen Strömungsgehäuses entlang zu äußeren Ausläufern des Verwirbelungselements strömt, um von dort mittig in Richtung der Einlassöffnung - nach oben - zurück zu strömen.

In einer Ausführungsform weist das Strömungsgehäuse seitlich zur Längsachse - also seitlich zur Hauptströmungsrichtung - mindestens ein Prallelement auf, das derart angeordnet ist, dass in einen Randbereich des Strömungsgehäuses gelangende Tropfen des Reaktionsmediums an dem mindestens einen Prallelement anschlagen. Vorteilhaft können diese Tropfen an dem mindestens einen Prallelement in kleinere Tröpfchen zerschellen, die leichter und schneller verdampft werden können.

In einer Ausführungsform ist das mindestens eine Prallelement in Richtung der Längsachse - das heißt in Hauptströmungsrichtung - auf Höhe des Verwirbelungselements angeordnet.

In einer Ausführungsform ist vorgesehen, dass das mindestens eine Prallelement als zwei sich senkrecht zur Längsachse - das heißt senkrecht zur Hauptströmungsrichtung - gegenüberliegende, radial in einen Strömungsbereich des Gasstroms vorstehende Ringsegmente ausgebildet sind. Dies stellt eine besonders vorteilhafte und effektive Ausgestaltung des mindestens einen Prallelements dar. Insbesondere bilden dabei jeweils zwei gegenüberliegende Ringsegmente ein Prallelement.

Alternativ oder zusätzlich ist vorgesehen, dass das Strömungsgehäuse zwei in Richtung der Längsachse - das heißt in Hauptströmungsrichtung - hintereinander angeordnete Prallelemente aufweist. Dabei können von dem ersten, vorderen Prallelement nicht abgefangene Tropfen des Reaktionsmediums von dem zweiten, hinteren Prallelement abgefangen werden.

In einer Ausgestaltung wird jedes der beiden in Richtung der Längsachse hintereinander angeordneten Prallelemente durch je zwei einander gegenüberliegende Ringsegmente, das heißt je ein Ringsegmentpaar, gebildet.

In einer Ausführungsform steht ein hinteres - das heißt in Hauptströmungsrichtung zweites - Prallelement der Prallelemente, insbesondere die beiden hinteren Ringsegmente der zwei Ringsegmentpaare, radial weiter in den Strömungsbereich vor als ein vorderes Prallelement der Prallelemente. Insbesondere auf diese Weise können von dem ersten, vorderen Prallelement nicht abgefangene Tropfen des Reaktionsmediums besonders effektiv von dem zweiten, hinteren Prallelement abgefangen werden.

Unter einer radialen Richtung wird dabei im Kontext der vorliegenden technischen Lehre insbesondere eine Richtung verstanden, die senkrecht auf der Längsachse steht.

Es kann auch genau ein Prallelement vorgesehen sein, oder es können mehr als zwei, insbesondere fünf, Prallelemente vorgesehen sein. Weiterhin kann ein Prallelement nur ein Ringsegment oder mehr als zwei Ringsegmente aufweisen.

Das mindestens eine Prallelement kann auch einstückig mit der Umfangswandung ausgebildet sein, insbesondere als lokale Verformung oder Umformung der Umfangswandung, beispielsweise als eine Art Balg, wie bei einem Kompensator.

In einer Ausführungsform weist das Strömungsgehäuse eine Umfangswandung auf.

In einer Ausführungsform ist die Umfangswandung zylindrisch ausgebildet, insbesondere als Mantelfläche eines Kreiszylinders. Es ist aber auch möglich, dass die Umfangswandung aus einer Mehrzahl ebener, in Winkeln zueinander stehender Wandungsabschnitte realisiert ist.

Gemäß einer Weiterbildung der Erfindung ist vorgesehen, dass das Strömungsgehäuse mindestens ein Abstandselement aufweist, das angeordnet und eingerichtet ist, um das Verwirbelungselement von der Umfangswandung des Strömungsgehäuses beabstandet zu halten.

In einer Ausführungsform weist das Strömungsgehäuse eine Mehrzahl von Abstandselementen auf, die vorzugsweise entlang der Umfangsrichtung um die Längsachse und/oder entlang der Längsachse verteilt, d.h. zueinander beabstandet, angeordnet sind.

Das mindestens eine Abstandselement verbindet das Verwirbelungselement - und vorzugsweise das mindestens eine Leitblech - mit der Umfangswandung. Insbesondere ist das Verwirbelungselement - und vorzugsweise das mindestens eine Leitblech - über das mindestens eine Abstandselement an der Umfangswandung befestigt.

Vorteilhaft kann aufgrund der durch das mindestens eine Abstandselement bewirkten Beabstandung zwischen dem Verwirbelungselement - und insbesondere dem mindestens einen Leitblech - einerseits und der Umfangswandung andererseits eine effektive Umströmung des Verwirbelungselements mit der heißen Gasströmung und damit eine besonders effektive Beheizung des Verwirbelungselements - und vorzugsweise auch des mindestens einen Leitblechs - gewährleistet werden. Weiter vorteilhaft definiert somit das mindestens eine Abstandselement den Abstand zwischen der Umfangswandung und dem Verwirbelungselement, wobei durch die Wahl der Länge des mindestens einen Abstandselements und damit des Abstands eine Aufteilung der Gasströmung auf den ersten und zweiten Strömungspfad eingestellt und zugleich die Intensität der rückwärtigen Beheizung des Verwirbelungselements vorgegeben werden kann.

Gemäß einer Weiterbildung der Erfindung ist vorgesehen, dass das mindestens eine Abstandselement als Abstandspin ausgebildet ist. Alternativ oder zusätzlich weist das mindestens eine Abstandselement eine zylindrische Form oder Säulenform auf. Weiter alternativ oder zusätzlich ist das mindestens eine Abstandselement als Abstandsbolzen ausgebildet.

Das mindestens eine Abstandselement kann in einer Ausgestaltung stoffschlüssig mit der Umfangswandung und dem Verwirbelungselement verbunden sein, beispielsweise verlötet oder verschweißt.

Insbesondere weist das mit dem mindestens einen Leitblech einteilig ausgebildete Verwirbelungselement überall einen - vorzugsweise durch das mindestens eine Abstandselement definierten - radialen Abstand zu der Umfangswandung auf. Hierdurch kann es vorteilhaft entlang seiner gesamten umfänglichen Erstreckung und auch Längserstreckung von einem Teil der Gasströmung umströmt und besonders effektiv durch die Gasströmung beheizt werden.

Gemäß einer Weiterbildung der Erfindung ist vorgesehen, dass das Strömungsgehäuse die Umfangswandung und eine erste Stirnseite aufweist, wobei die Einlassöffnung an der Umfangswandung als der Einlasswandung und die mindestens eine Dosiervorrichtung an der ersten Stirnseite angeordnet ist.

Insbesondere ist ein Inneres des Strömungsgehäuses durch die Umfangswandung einerseits und die erste Stirnseite andererseits begrenzt.

Die erste Stirnseite weist bevorzugt einen Stirnseiten-Normalenvektor auf, der schräg zu der Längsachse orientiert ist. Dabei weist die Eindosierrichtung vorzugsweise in Richtung des Stirnseiten-Normalenvektors. Insbesondere schließen der Stirnseiten-Normalenvektor und die Längsachse den dritten Winkel ein.

Das Verwirbelungselement ist bevorzugt an der Umfangswandung angeordnet, insbesondere befestigt. Alternativ oder zusätzlich ist das mindestens eine Prallelement an der Umfangswandung angeordnet, insbesondere befestigt.

In einer Ausführungsform weist das Strömungsgehäuse eine zweite Stirnseite auf, an der die Auslassöffnung angeordnet ist. Insbesondere ist die zweite Stirnseite die oben beschriebene Auslasswandung.

In einer Ausführungsform liegt die zweite Stirnseite der ersten Stirnseite in Richtung der Längsachse, das heißt in Hauptströmungsrichtung, gegenüber.

Gemäß einer Weiterbildung der Erfindung ist vorgesehen, dass die Mischvorrichtung zwei Dosiervorrichtungen aufweist. Vorteilhaft können auf diese Weise einerseits bei größeren Gas-Massenströmen auch mit kleineren Dosiervorrichtungen, beispielsweise solchen aus dem LKW-Bereich, höhere Reaktionsmedienströme eindosiert werden, wobei jedoch zugleich kleinere Reaktionsmedienströme besonders genau zugemessen werden können, insbesondere durch Abschalten von einer der Dosiervorrichtungen.

In einer Ausführungsform sind die beiden Dosiervorrichtungen nebeneinander auf gleicher Höhe an der ersten Stirnseite angeordnet.

In einer Ausführungsform sind die beiden Dosiervorrichtungen derart relativ zu dem Verwirbelungselement angeordnet, dass jede Dosiervorrichtung der Dosiervorrichtungen das Reaktionsmedium jeweils in einen Volumenbereich einer ihr zugeordneten Drallströmung der beiden Drallströmungen des Doppeldralls eindosiert. Anders formuliert ist jeder der beiden Drallströmungen jeweils eine der Dosiervorrichtungen zur Eindosierung des Reaktionsmediums in die jeweilige Drallströmung zugeordnet.

In einer anderen Ausführungsform ist vorgesehen, dass die Mischvorrichtung drei Dosiervorrichtungen aufweist. Vorteilhaft können auch auf diese Weise einerseits bei größeren Gas-Massenströmen auch mit kleineren Dosiervorrichtungen, beispielsweise solchen aus dem LKW-Bereich, nochmals höhere Reaktionsmedienströme eindosiert werden, wobei jedoch zugleich kleinere Reaktionsmedienströme besonders genau zugemessen werden können, insbesondere durch Abschalten von einer oder zwei der Dosiervorrichtungen.

In einer Ausführungsform sind die drei Dosiervorrichtungen symmetrisch in Form eines insbesondere gleichschenkligen Dreiecks an der ersten Stirnseite angeordnet.

Gemäß einer Weiterbildung der Erfindung ist vorgesehen, dass das Strömungsgehäuse im Bereich der Einlassöffnung mindestens ein Strömungsausrichtungselement aufweist. Vorteilhaft kann eine ungleichmäßige, insbesondere verwirbelte Gasströmung durch das mindestens eine Strömungsausrichtungselement vergleichmäßigt oder - anders ausgedrückt - egalisiert werden. Insbesondere kann eine von der Turbine eines Abgasturboladers heranströmende Gasströmung durch das mindestens eine Strömungsausrichtungselement ausgerichtet, insbesondere parallelisiert werden, bevor sie dann erneut durch das Verwirbelungselement einen - definierten - Drall erhält.

In einer Ausführungsform weist das Strömungsgehäuse mindestens zwei Strömungsleitplatten als das mindestens eine Strömungsausrichtungselement auf.

In einer Ausgestaltung sind die mindestens zwei Strömungsleitplatten in einer zur Einströmrichtung senkrechten Querschnittsebene parallel zueinander angeordnet. Alternativ oder zusätzlich sind die mindestens zwei Strömungsleitplatten in der zur Einströmrichtung senkrechten Querschnittsebene schräg, insbesondere orthogonal zueinander angeordnet.

Die Aufgabe wird in einem zweiten Aspekt auch gelöst, indem ein Abgaspfad für eine Brennkraftmaschine geschaffen wird, der mindestens eine erfindungsgemäße Mischvorrichtung oder eine Mischvorrichtung nach einer oder mehreren der zuvor beschriebenen Ausführungsformen aufweist. In Zusammenhang mit dem Abgaspfad ergeben sich insbesondere diejenigen Vorteile, die zuvor bereits in Zusammenhang mit der Mischvorrichtung erläutert wurden.

Bevorzugt weist der Abgaspfad stromabwärts der Mischvorrichtung einen Katalysator, insbesondere einen Oxidationskatalysator oder einen Katalysator zu selektiven katalytischen Reduktion von Stickoxiden (SCR-Katalysator) auf.

In einer Ausführungsform weist der Abgaspfad stromaufwärts der Mischvorrichtung einen Abgasturbolader, insbesondere mindestens eine Turbine eines Abgasturboladers, auf.

Die Aufgabe wird in einem dritten Aspekt auch gelöst, indem eine Brennkraftmaschine geschaffen wird, die eine erfindungsgemäße Mischvorrichtung oder eine Mischvorrichtung nach einer oder mehreren der zuvor beschriebenen Ausführungsformen aufweist, oder die einen erfindungsgemäßen Abgaspfad oder einen Abgaspfad nach einer oder mehreren der zuvor beschriebenen Ausführungsformen aufweist. In Zusammenhang mit der Brennkraftmaschine ergeben sich insbesondere diejenigen Vorteile, die zuvor bereits in Zusammenhang mit der Mischvorrichtung oder dem Abgaspfad erläutert wurden.

Die Brennkraftmaschine kann bevorzugt als stationäre Brennkraftmaschine eingerichtet sein, insbesondere zum Antrieb eines Generators oder einer Förderpumpe. Alternativ kann die Brennkraftmaschine eingerichtet sein zum Antrieb eines Kraftfahrzeugs, insbesondere eines Nutzfahrzeugs, beispielsweise eines Lastkraftwagens, einer Konstruktions- oder Baumaschine, eines der Verteidigung dienenden Fahrzeugs, eines Schifffahrzeugs oder eines Flugzeugs.

Die Erfindung wird im Folgenden anhand der Zeichnung näher erläutert. Dabei zeigen:
- Figur 1: eine erste Ansicht eines ersten Ausführungsbeispiels einer Mischvorrichtung;
- Figur 2: eine zweite Ansicht des ersten Ausführungsbeispiels der Mischvorrichtung gemäß Figur 1;
- Figur 3: eine Schnittansicht des ersten Ausführungsbeispiels der Mischvorrichtung entlang der Linie A-A in Figur 1;
- Figur 4: eine Schnittansicht des ersten Ausführungsbeispiels der Mischvorrichtung entlang der Linie B-B in Figur 2;
- Figur 5: eine Detailansicht eines Details D aus Figur 4;
- Figur 6: eine Schnittansicht des ersten Ausführungsbeispiels der Mischvorrichtung entlang der Linie C-C in Figur 1;
- Figur 7: eine erste Ansicht eines zweiten Ausführungsbeispiels einer Mischvorrichtung;
- Figur 8: eine schematische Seitenansicht des zweiten Ausführungsbeispiels der Mischvorrichtung;
- Figur 9: eine Schnittansicht des zweiten Ausführungsbeispiels der Mischvorrichtung entlang der Linie C-C in Figur 7;
- Figur 10: Darstellungen eines dritten Ausführungsbeispiels der Mischvorrichtung, und
- Figur 11: eine schematische Darstellung eines vierten Ausführungsbeispiels der Mischvorrichtung.

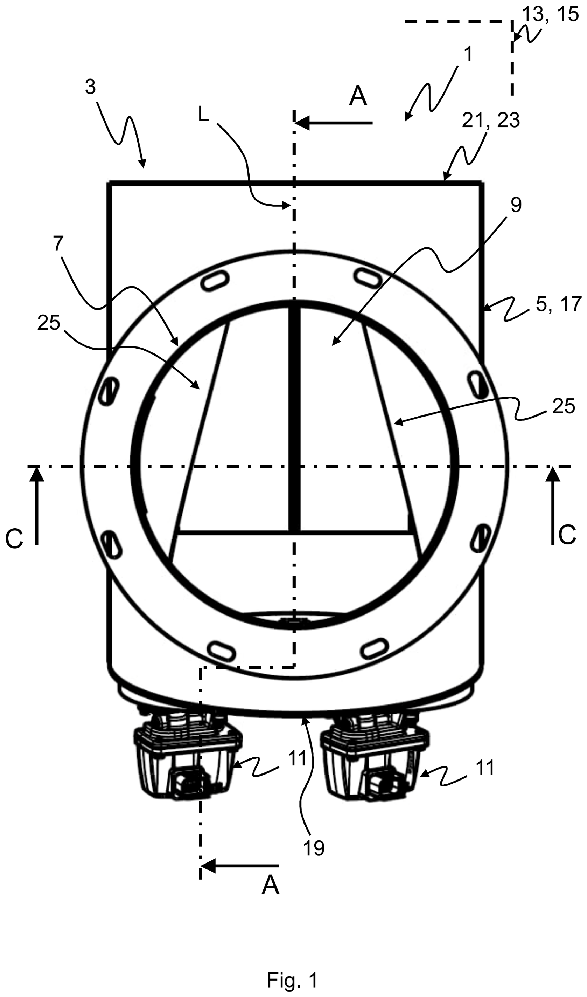

**Fig. 1** zeigt eine erste Ansicht eines ersten Ausführungsbeispiels einer Mischvorrichtung 1.

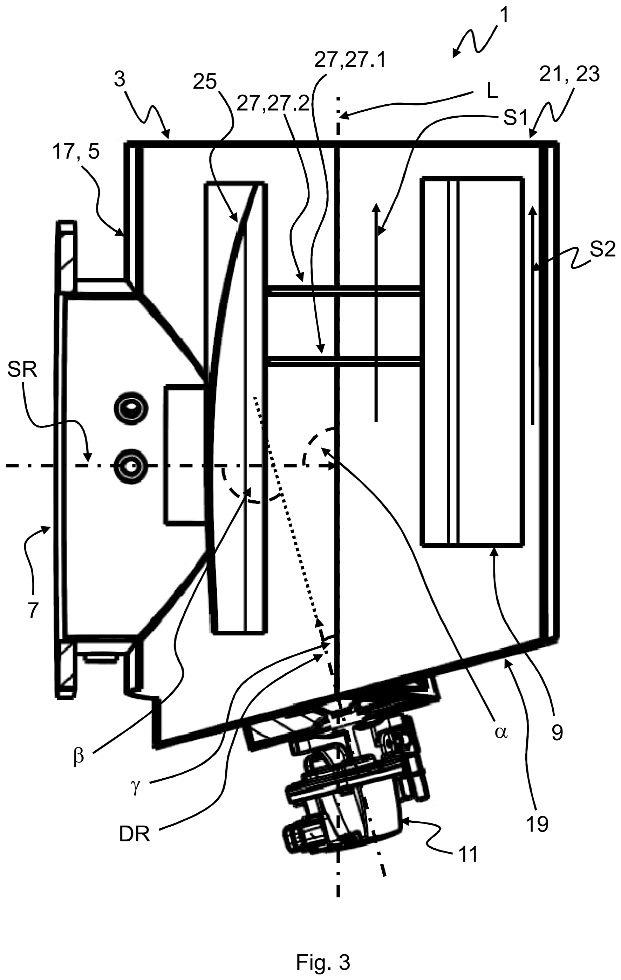

Die Mischvorrichtung 1 ist eingerichtet zum Einmischen eines Reaktionsmediums in einen Gasstrom und weist ein Strömungsgehäuse 3 auf, das eine Längsachse L und eine Einlasswandung 5 mit einer Einlassöffnung 7 für den Gasstrom aufweist. Die Längsachse L definiert eine Hauptströmungsrichtung durch das Strömungsgehäuse 3. Die Einlassöffnung 7 ist derart relativ zu der Längsachse L angeordnet, dass eine Einströmrichtung SR des Gasstroms mit der Längsachse L einen ersten endlichen Winkel α - siehe Figur 3 - einschließt. In dem Strömungsgehäuse 3 ist der Einlassöffnung entlang der Einströmrichtung SR gegenüberliegend ein vorzugsweise als Verwirbelungsblech ausgebildetes Verwirbelungselement 9 angeordnet, wobei das Verwirbelungselement 9 derart angeordnet ist, dass ein erster Strömungspfad S1 - siehe Figur 3 - für den Gasstrom in dem Strömungsgehäuse 3 auf einer der Einlassöffnung 7 zugewandten Seite des Verwirbelungselements 9 gebildet ist, wobei ein zweiter Strömungspfad S2 (Figur 3) für den Gasstrom in dem Strömungsgehäuse 3 auf einer der Einlassöffnung 7 abgewandten Seite des Verwirbelungselements 9 gebildet ist. Die Mischvorrichtung 1 weist außerdem mindestens eine Dosiervorrichtung 11 zur Eindosierung des Reaktionsmediums in das Strömungsgehäuse 3 auf, wobei die mindestens eine Dosiervorrichtung 11 angeordnet und eingerichtet ist, um das Reaktionsmedium entlang einer Eindosierrichtung DR einzudosieren, die schräg zu der Einströmrichtung SR und schräg zu der Längsachse L angeordnet ist (Figur 3).

Die Mischvorrichtung ist bevorzugt Teil eines Abgaspfads 13 einer Brennkraftmaschine 15 und im Abgasstrom der Brennkraftmaschine 15 stromaufwärts eines Katalysators angeordnet, insbesondere eines Katalysators zur selektiven katalytischen Reduktion von Stickoxiden (SCR-Katalysator), wobei als das Reaktionsmedium bevorzugt Harnstoff oder eine harnstoffhaltige Lösung, insbesondere eine Harnstoff-Wasser-Lösung, mittels der Dosiervorrichtung 11 in die Mischvorrichtung 11 eindosiert wird.

Das Strömungsgehäuse 3 weist bevorzugt eine Umfangswandung 17 auf, die bei dem hier dargestellten ersten Ausführungsbeispiel zylindrisch ausgebildet ist, insbesondere als Mantelfläche eines Kreiszylinders, und die die Einlasswandung 5 bildet. Außerdem weist das Strömungsgehäuse 3 eine erste Stirnseite 19 auf, wobei die mindestens eine Dosiervorrichtung 11 an der ersten Stirnseite 19 angeordnet ist.

Das Verwirbelungselement 9 ist bevorzugt an der Umfangswandung 17 angeordnet, insbesondere befestigt, beispielsweise angeschweißt oder angelötet.

Bevorzugt weist das Strömungsgehäuse 3 eine zweite Stirnseite 21 - insbesondere als eine Auslasswandung - auf, an der bevorzugt eine Auslassöffnung 23 angeordnet ist. Dabei kann die zweite Stirnseite 21 der ersten Stirnseite 19 in Richtung der Längsachse L gegenüberliegen.

Bei dem hier dargestellten, ersten Ausführungsbeispiel weist die Mischvorrichtung 1 zwei insbesondere als Dosierventile ausgebildete Dosiervorrichtungen 11 auf, die nebeneinander auf gleicher Höhe an der ersten Stirnseite 19 angeordnet sind.

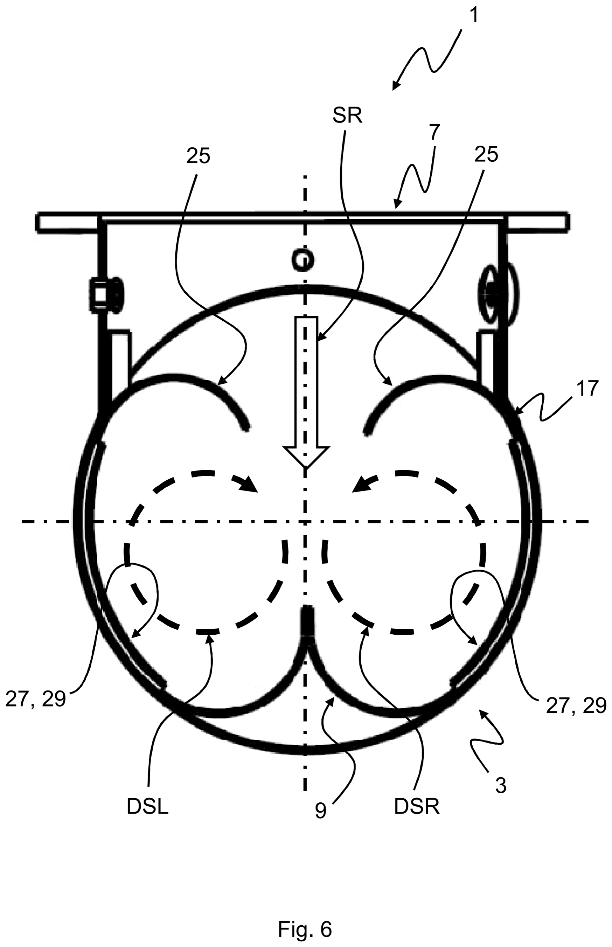

Das Strömungsgehäuse 3 weist im Bereich der Einlassöffnung 7 bevorzugt mindestens ein Leitblech 25 auf, insbesondere hier zwei sich senkrecht zur Längsachse L gegenüberliegende Leitbleche 25. Der einströmende Gasstrom kann dadurch mittig auf das Verwirbelungselement 9 geleitet werden, sodass sich der unten zu Figur 6 beschriebene, von innen nach außen rotierende Doppeldrall einstellen kann.

Die beiden Leitbleche 25 sind insbesondere derart angeordnet und ausgebildet, dass sie einen effektiven Einlassquerschnitt für den Gasstrom in Richtung der Längsachse L verengen. Insbesondere nähern sich die Leitbleche 25 entlang der Längsachse L einander an, in anderen Worten verringert sich ein Abstand der Leitbleche 25 zueinander entlang der Längsachse L.

Die Leitbleche 25 sind bei dem ersten Ausführungsbeispiel mehrteilig mit dem Verwirbelungselement 9 ausgebildet und insbesondere separat von diesem an dem Strömungsgehäuse 3 angeordnet.

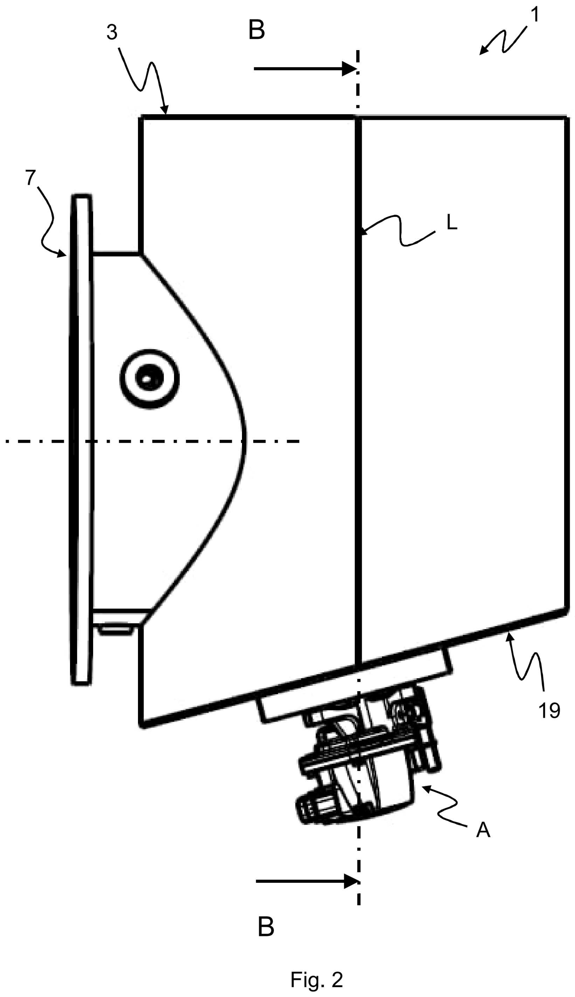

**Fig. 2** zeigt eine zweite Ansicht des ersten Ausführungsbeispiels der Mischvorrichtung 1 gemäß Fig. 1.

Elemente, die in einer Figur mehrfach dargestellt sind, sind der besseren Übersichtlichkeit wegen jeweils nur einmal mit einem Bezugszeichen versehen. Außerdem sind gleiche und funktionsgleiche Elemente in allen Figuren mit gleichen Bezugszeichen versehen, sodass insofern jeweils auf die vorangegangene Beschreibung verwiesen wird.

Hier ist insbesondere die gegen die senkrechte Lage zur Längsachse L verkippte erste Stirnseite 19 erkennbar, an der die Dosiervorrichtungen 11 auf gleicher Höhe nebeneinander angeordnet sind.

**Fig. 3** zeigt eine Schnittansicht der Mischvorrichtung 1 entlang der Linie A-A in Figur 1.

Der erste Winkel α beträgt bei dem hier dargestellten, ersten Ausführungsbeispiel 90°.

Die Eindosierrichtung DR schließt mit der Einströmrichtung SR einen zweiten Winkel β ein, der vorzugsweise von 95° bis 115°, vorzugsweise 100° bis 110°, vorzugsweise 102° bis 106°, vorzugsweise 105°, beträgt.

Weiter schließt die Eindosierrichtung DR mit der Längsachse L einen dritten Winkel γ von 5° bis 25°, vorzugsweise 10° bis 20°, vorzugsweise 15°. Die Eindosierrichtung DR weist insbesondere in Richtung eines Stirnseiten-Normalenvektors der Stirnseite 19. Insbesondere schließen der Stirnseiten-Normalenvektor und die Längsachse L den dritten Winkel γ ein.

Der erste Strömungspfad S1 ist insbesondere ein Hauptströmungspfad für den Gasstrom, wobei zugleich der zweite Strömungspfad S2 ein Nebenströmungspfad für den Gasstrom ist. Somit strömt ein größerer Teil, das heißt ein Hauptteil des Gasstroms, entlang des ersten Strömungspfads S1, wobei ein kleinerer Teil des Gasstroms entlang des zweiten Strömungspfads S2 strömt. Der zweite Strömungspfad S2 dient im Wesentlichen der rückseitigen Erwärmung des Verwirbelungselements 9 und damit einer wirksamen Vermeidung von Ablagerungen des Reaktionsmediums auf dem Verwirbelungselement 9, während der erste Strömungspfad S1 der Aufbereitung und Durchmischung des Reaktionsmediums mit dem Gasstrom dient.

Das Verwirbelungselement 9 ist insbesondere relativ zu einer gedachten Mittellinie der Einlassöffnung 7 in Richtung der Längsachse L außermittig verschoben angeordnet; insbesondere erstreckt es sich in Hauptströmungsrichtung gesehen anströmseitig nicht bis zu einem ersten Fluchtpunkt mit einem anströmseitigen Ende der Einlassöffnung 7, abströmseitig dagegen über einen zweiten Fluchtpunkt mit einem abströmseitigen Ende der Einlassöffnung 7 hinaus. Insbesondere auf diese Weise kann ein Teil der Gassströmung in den zweiten Strömungspfad S2 unter dem Verwirbelungselement 9 (bzw. in der Figur rechts von dem Verbindungselement 9) gelangen.

Das Strömungsgehäuse 3 weist bevorzugt seitlich zur Längsachse L mindestens ein in Richtung der Längsachse L auf Höhe des Verwirbelungselements 9 angeordnetes Prallelement 27, hier zwei entlang der Längsachse L hintereinander angeordnete Prallelemente 27.1, 27.2 auf, die derart angeordnet sind, dass in einen Randbereich des Strömungsgehäuses 3 gelangende Tropfen des Reaktionsmediums an den Prallelementen 27 anschlagen. Vorteilhaft können diese Tropfen dort in kleinere Tröpfchen zerschellen, die leichter und schneller verdampft werden können.

Die Prallelemente 27 sind bevorzugt an der Umfangswandung 17 angeordnet, insbesondere daran befestigt.

Das Verwirbelungselement 9 ist derart angeordnet, dass der zweite Strömungspfad S2 strömungstechnisch parallel zu dem ersten Strömungspfad S1 ausgebildet ist. Der Gasstrom wird somit ausgehend von der Einlassöffnung 7 auf den ersten Strömungspfad S1 und den zweiten Strömungspfad S2 aufgeteilt. Bevorzugt werden der erste Strömungspfad S1 und der zweite Strömungspfad S2 stromaufwärts der Auslassöffnung 23 zusammengeführt.

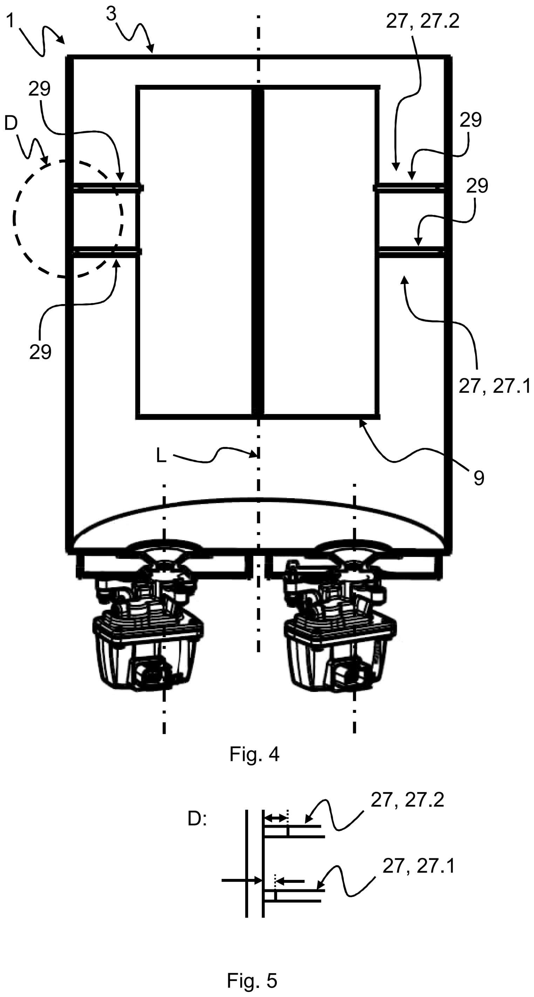

**Fig. 4** zeigt eine Schnittansicht der Mischvorrichtung 1 entlang der Linie B-B in Figur 2.

Die Prallelemente 27 sind jeweils als einander paarweise senkrecht zur Längsachse L gegenüberliegende, radial in einen Strömungsbereich des Gasstroms vorstehende Ringsegmente 29 ausgebildet.

**Fig. 5** zeigt eine Detailansicht des Details D aus Figur 4.

In einer Ausführungsform steht das hintere - das heißt in Hauptströmungsrichtung zweite - Prallelement 27.2 radial weiter in den Strömungsbereich vor als das vordere - das heißt in Hauptströmungsrichtung erste - Prallelement 27. 1.

**Fig. 6** zeigt eine Schnittansicht der Mischvorrichtung 1 entlang der Linie C-C in Figur 1.

Das Verwirbelungselement 9 weist insbesondere in der in Figur 6 dargestellten Querschnittsebene, auf der die Längsachse L senkrecht steht, die Form eines umgekehrten, abgerundeten V - eines V mit gekrümmten, insbesondere nach innen eingebauchten, d.h. von außerhalb des V betrachtet konkaven Schenkeln oder Armen - auf. Dabei öffnet sich das abgerundete V entlang der - fortgesetzt gedachten - Einströmrichtung SR, das heißt die - abgerundete - Spitze des V zeigt in Richtung der Einlassöffnung 7 und damit entgegen der Einströmrichtung SR, während sich die Arme des V von der Einlassöffnung 7 weg erstrecken. Das Verwirbelungselement 9 weist außerdem insgesamt eine Geometrie auf, die gleichsam senkrecht zu der in Figur 6 dargestellten Querschnittsebene - in Richtung der Längsachse L - extrudiert ist.

Insbesondere auf diese Weise ist das Verwirbelungselement 9 angeordnet und ausgebildet, um entlang der Längsachse L einen gegenläufigen Doppeldrall in dem Gasstrom zu erzeugen. Somit kann eine besonders effektive Durchmischung des Reaktionsmediums mit der Gasströmung erreicht werden.

Dabei werden zwei zueinander parallelversetzte Drallströmungen DSL, DSR nebeneinander ausgebildet, wobei sich die zueinander parallelversetzten Drehachsen der Drallströmungen DSL, DSR in Richtung der Längsachse L erstrecken, und wobei die Drehsinne der Drallströmungen einander entgegengerichtet sind. Insbesondere ist - mit Blickrichtung entlang der Längsachse, in Hauptströmungsrichtung, das heißt hier in die Bildebene hinein - ein erster Drehsinn der in der Figur linken Drallströmung DSL mathematisch negativ, wobei ein anderer, zweiter Drehsinn der in der Figur rechten Drallströmung DSR mathematisch positiv ist.

Vorzugsweise sind die beiden Drallströmungen DSL, DSR jeweils von innen nach außen gerichtet. Die Gasströmung trifft also mittig im Inneren des Strömungsgehäuses 3 auf das Verwirbelungselement 9, wird durch dieses radial nach außen in die beiden Drallströmungen DSL, DSR umgelenkt, und strömt seitlich an den Wandungen - hier der Außenwandung 17 - des Strömungsgehäuses 3 wieder in Richtung der Einlassöffnung 7 - gleichsam zurück nach oben -, wodurch sich der jeweilige Drall ausbildet.

Bevorzugt ist das Verwirbelungselement 9 angeordnet und ausgebildet, um den gegenläufigen Doppeldrall mit anteilig homogener Aufteilung des Gasstroms zu erzeugen.

Die beiden Dosiervorrichtungen 11 sind insbesondere derart relativ zu dem Verwirbelungselement 9 angeordnet, dass jede Dosiervorrichtung 11 das Reaktionsmedium jeweils in eine ihr zugeordnete Drallströmung DSL, DSR eindosiert. Anders formuliert ist jeder der beiden Drallströmungen DSL, DSR jeweils eine der Dosiervorrichtungen 11 zur Eindosierung des Reaktionsmediums in die jeweilige Drallströmung DSL, DSR zugeordnet.

Das Verwirbelungselement 9 ist vorzugsweise derart ausgestaltet, dass ein Radius der jeweiligen Drallströmung DSL, DSR von 35 % bis 60 %, vorzugsweise 40 % bis 50 %, vorzugsweise 42 % bis 48 %, vorzugsweise 43 % bis 47 %, vorzusehendes 44 % bis 46 %, vorzugsweise 45 %, eines - senkrecht zur Längsachse gemessenen - Breitenmaßes, insbesondere eines Radius des Strömungsgehäuses 3, beträgt.

Bevorzugt weist das Verwirbelungselement 9 eine globale Krümmung auf. Ein Krümmungsradius des Verwirbelungselements 9 kann lokal variieren oder global konstant sein. Der Krümmungsradius beträgt vorzugsweise - im Falle einer lokalen Variation optional an jeder Stelle des Verwirbelungselements 9 - von 20 % bis 80 %, vorzugsweise 30 % bis 70 %, vorzugsweise 35 % bis 60 %, vorzugsweise 40 % bis 50 %, vorzugsweise 42 % bis 48 %, vorzugsweise 43 % bis 47 %, vorzusehendes 44 % bis 46 %, vorzugsweise 45 %, des - senkrecht zur Längsachse gemessenen - Breitenmaßes, insbesondere des Radius des Strömungsgehäuses 3.

Alternativ oder zusätzlich erstrecken sich die Drehachsen der Drallströmungen DSL, DSR zumindest annähernd parallel, vorzugsweise parallel zur Längsachse L des Strömungsgehäuses 3.

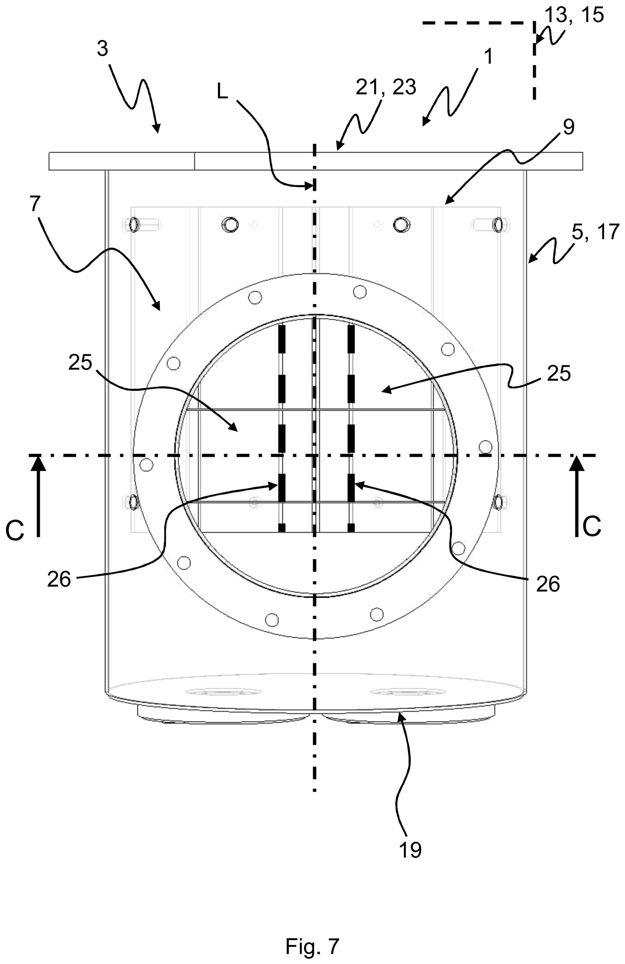

**Fig. 7** zeigt eine erste Ansicht eines zweiten Ausführungsbeispiels einer Mischvorrichtung 1, gleichsam mit nur zu Darstellungszwecken durchsichtiger Umfangswandung 17.

Bei dem zweiten Ausführungsbeispiel sind die Leitbleche 25 derart angeordnet, dass sie den effektiven Einlassquerschnitt für den Gasstrom in Richtung der Längsachse L konstant lassen. Insbesondere bilden sie dabei einen Einlassschlitz mit parallelen Rändern, wie hier durch dicke strichlierte Linien 26 dargestellt.

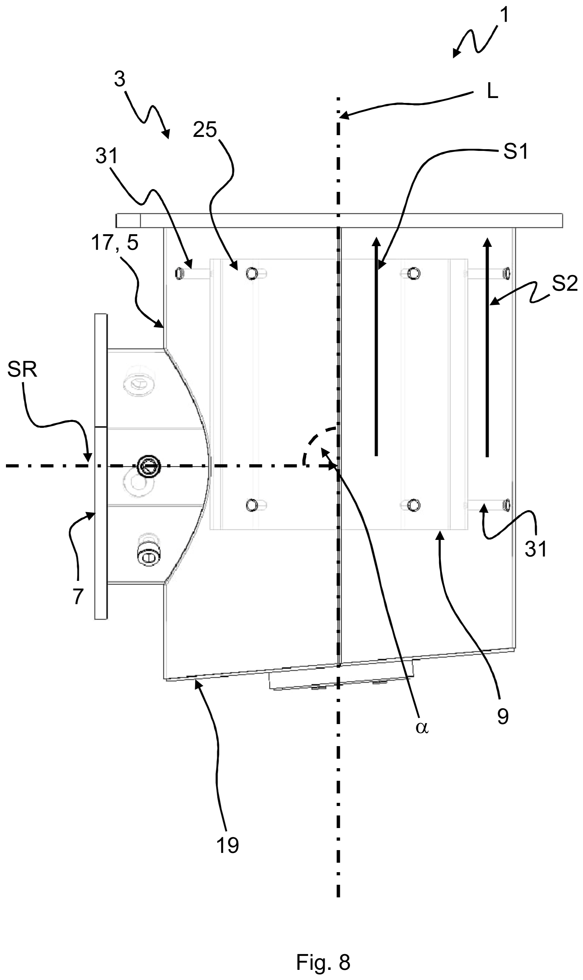

**Fig. 8** zeigt eine schematische Seitenansicht des zweiten Ausführungsbeispiels der Mischvorrichtung 1, ebenfalls mit nur zu Darstellungszwecken durchsichtiger Umfangswandung 17.

Bei dem zweiten Ausführungsbeispiel sind die Leitbleche 25 einteilig, vorzugsweise materialeinheitlich mit dem Verbindungselement 9 ausgebildet, insbesondere als gebogenes Blech.

Das Strömungsgehäuse 3 weist bevorzugt mindestens ein Abstandselement 31 auf, das angeordnet und eingerichtet ist, um das Verwirbelungselement 9 von der Umfangswandung des Strömungsgehäuses 3 beabstandet zu halten. Insbesondere weist das Strömungsgehäuse 3 eine Mehrzahl von Abstandselementen 31 auf, die hier entlang der Umfangsrichtung um die Längsachse L und entlang der Längsachse L verteilt, d.h. zueinander beabstandet, angeordnet sind. Der besseren Übersichtlichkeit wegen sind nur zwei dieser Abstandselement 31 mit Bezugszeichen versehen. Die Abstandselemente 31 verbinden das Verwirbelungselement 9 - zugleich auch die Leitbleche 25 - mit der Umfangswandung 17. Insbesondere ist das mit den Leitblechen 25 einteilig ausgebildete Verwirbelungselement 9 über die Abstandselemente 31 an der Umfangswandung 17 befestigt.

Die Abstandselemente 31 sind hier als Abstandspins oder Abstandsbolzen ausgebildet, insbesondere weisen sie eine zylindrische Form oder Säulenform auf. Sie können stoffschlüssig mit der Umfangswandung 17 und dem Verwirbelungselement 9 verbunden sein, beispielsweise verlötet oder verschweißt.

Insbesondere weist das mit den Leitblechen 25 einteilig ausgebildete Verwirbelungselement 9 überall einen durch die Abstandselemente 31 definierten radialen Abstand zu der Umfangswandung 17 auf.

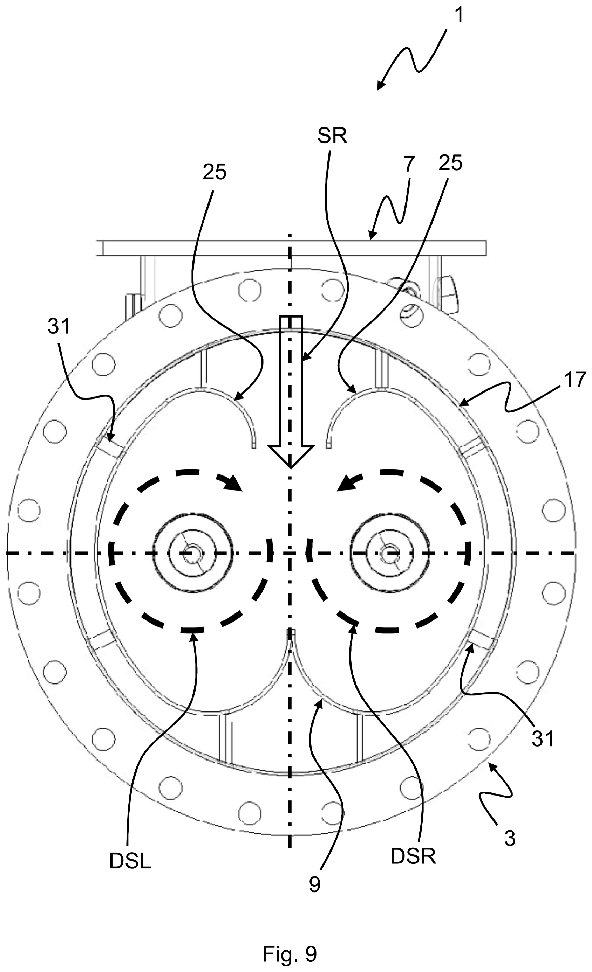

**Fig. 9** zeigt eine Schnittansicht des zweiten Ausführungsbeispiels der Mischvorrichtung 1 entlang der Linie C-C in Figur 7.

Das Verwirbelungselement 9 weist bei dem zweiten Ausführungsbeispiel in der Querschnittsebene, auf der die Längsachse L senkrecht steht, die Form eines abgerundeten W - eines W mit gekrümmten, insbesondere nach außen ausgebauchten, d.h. von außerhalb des W betrachtet konvexen Schenkeln - auf. Insbesondere öffnet sich das abgerundete W entgegen der Einströmrichtung SR; anders ausgedrückt, weist die - bevorzugt ebenfalls abgerundete oder insbesondere dachförmig abgeschrägte - innere, mittige Spitze des W in Richtung der Einlassöffnung 7, wobei sich auch die Schenkel des W in Richtung der Einlassöffnung 7 erstrecken. Blickt man also wie in Figur 9 entlang der Längsachse L in Hauptströmungsrichtung des Gasstroms und ordnet die Einlassöffnung 7 oben an, hat das Verwirbelungselement 9 in der Querschnittsebene die Form eines aufrecht stehenden, abgerundeten W, bei dem die Spitze und die - insbesondere konkaven - Schenkel nach oben weisen. Das Verwirbelungselement 9 weist vorzugsweise außerdem eine Geometrie auf, bei der diese Querschnittsform gleichsam senkrecht zu der Querschnittsebene - in Richtung der Längsachse - L extrudiert ist.

Besonders bevorzugt bilden die - verlängerten - Schenkel des abgerundeten W des Verwirbelungselements 9 die beiden Leitbleche 25, wobei sie insbesondere zur Mitte hin, das heißt bereichsweise in Richtung der Längsachse L, zurückgekrümmt ausgebildet sind.

Vorzugsweise weist das Strömungsgehäuse 1 bei dem zweiten Ausführungsbeispiel keine Prallelemente auf oder ist - anders ausgedrückt - frei von Prallelementen.

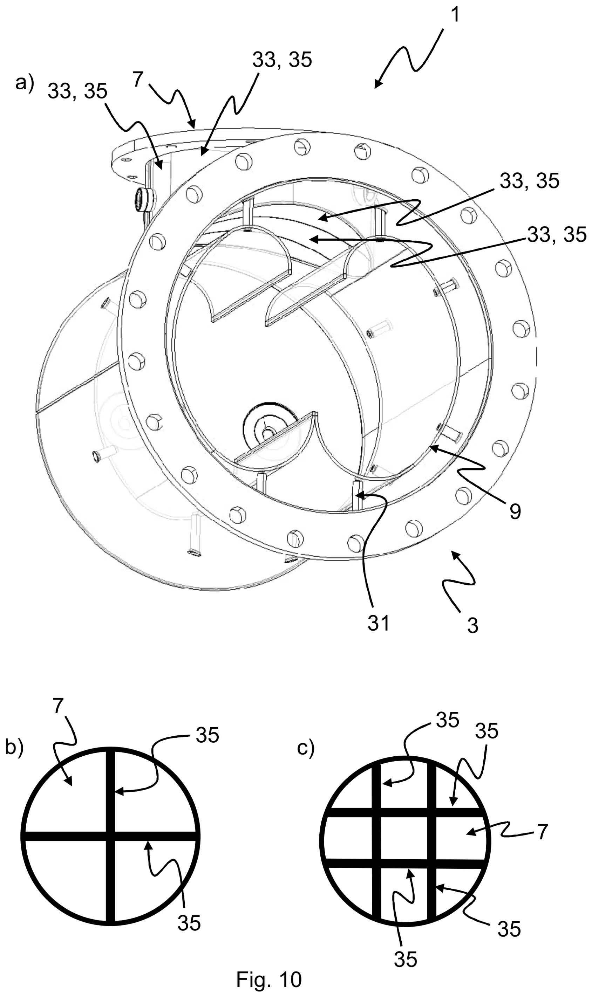

**Fig. 10** zeigt Darstellungen eines dritten Ausführungsbeispiels der Mischvorrichtung 1, wiederum mit bei a) nur zu Darstellungszwecken durchsichtiger Umfangswandung 17.

Bei dem dritten Ausführungsbeispiel, das im Übrigen dem zweiten Ausführungsbeispiel entspricht, weist das Strömungsgehäuse 1 im Bereich der Einlassöffnung 7 mindestens ein Strömungsausrichtungselement 33 auf. Hierdurch kann vorteilhaft eine ungleichmäßige, insbesondere verwirbelte Gasströmung egalisiert werden.

Bei a) ist dargestellt, dass das das Strömungsgehäuse 3 zwei Strömungsausrichtungselemente 33 nämlich zwei in einer zur Einströmrichtung senkrechten Querschnittsebene parallel zueinander ausgerichtete Strömungsleitplatten 35 auf.

Bei b) ist dargestellt, dass die zwei Strömungsleitplatten 35 in der zur Einströmrichtung senkrechten Querschnittsebene auch senkrecht zueinander angeordnet sein können.

Bei c) wiederum sind vier Strömungsleitplatten 35 dargestellt, die in Gitterform paarweise parallel und paarweise senkrecht zueinander angeordnet sind.

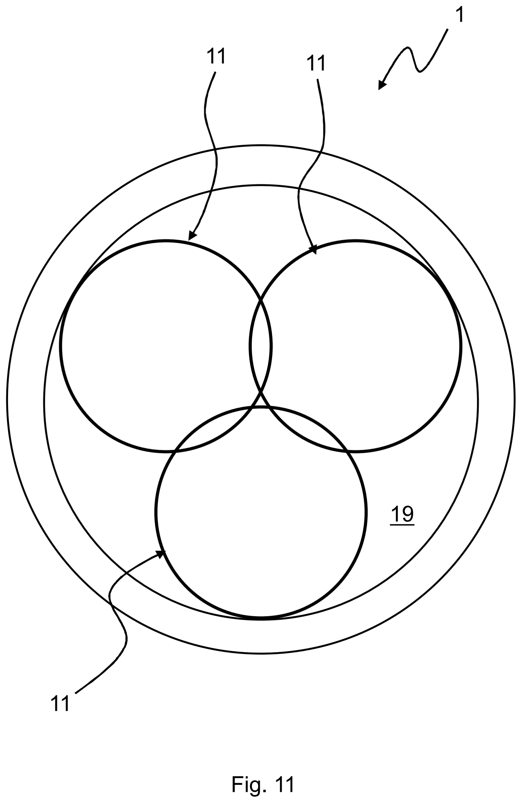

**Fig. 11** zeigt eine schematische Darstellung eines vierten Ausführungsbeispiels der Mischvorrichtung 1.

Bei dem vierten Ausführungsbeispiel weist die Mischvorrichtung 1 drei Dosiervorrichtungen 11 auf. Die drei Dosiervorrichtungen 11 sind bevorzugt symmetrisch in Form eines insbesondere gleichschenkligen Dreiecks an der ersten Stirnseite 19 angeordnet.

## Patentansprüche

1. Mischvorrichtung (1) zum Einmischen eines Reaktionsmediums in einen Gasstrom, wobei
- die Mischvorrichtung (1) ein Strömungsgehäuse (3) aufweist, das eine Längsachse (L) und eine Einlasswandung (5) mit einer Einlassöffnung (7) für den Gasstrom aufweist, wobei
- die Einlassöffnung (7) derart relativ zu der Längsachse (L) angeordnet ist, dass eine Einströmrichtung (SR) des Gasstroms mit der Längsachse (L) einen ersten endlichen Winkel (α) einschließt, wobei
- in dem Strömungsgehäuse (3) der Einlassöffnung (7) entlang der Einströmrichtung (SR) gegenüberliegend ein Verwirbelungselement (9) angeordnet ist, wobei
- das Verwirbelungselement (9) derart angeordnet ist, dass ein erster Strömungspfad (S1) für den Gasstrom in dem Strömungsgehäuse (3) auf einer der Einlassöffnung (7) zugewandten Seite des Verwirbelungselements (9) gebildet ist, wobei ein zweiter Strömungspfad (S2) für den Gasstrom in dem Strömungsgehäuse (3) auf einer der Einlassöffnung (7) abgewandten Seite des Verwirbelungselements (9) gebildet ist, wobei
- die Mischvorrichtung (1) mindestens eine Dosiervorrichtung (11) zur Eindosierung des Reaktionsmediums in das Strömungsgehäuse (3) aufweist, und wobei
- die mindestens eine Dosiervorrichtung (11) angeordnet und eingerichtet ist, um das Reaktionsmedium entlang einer Eindosierrichtung (DR) einzudosieren, die schräg zu der Einströmrichtung (SR) und schräg zu der Längsachse (L) angeordnet ist.

2. Mischvorrichtung (1) nach Anspruch 1, wobei das Verwirbelungselement (9) derart angeordnet ist, dass der zweite Strömungspfad (S2) strömungstechnisch parallel zu dem ersten Strömungspfad (S1) ausgebildet ist, sodass der Gasstrom ausgehend von der Einlassöffnung (7) auf den ersten Strömungspfad (S1) und den zweiten Strömungspfad (S2) aufgeteilt wird, wobei optional der erste Strömungspfad (S1) und der zweite Strömungspfad (S2) stromaufwärts einer Auslassöffnung (23) des Strömungsgehäuses (3) zusammengeführt werden.

3. Mischvorrichtung (1) nach einem der vorhergehenden Ansprüche, wobei der erste Winkel (α) von 20° bis 110°, vorzugsweise 90° beträgt.

4. Mischvorrichtung (1) nach einem der vorhergehenden Ansprüche, wobei die Eindosierrichtung (DR)
- mit der Einströmrichtung (SR) einen zweiten Winkel (β) von 95° bis 115°, vorzugsweise 100° bis 110°, vorzugsweise 102° bis 106°, vorzugsweise 105°, und/oder
- mit der Längsachse (L) einen dritten Winkel (γ) von 5° bis 25°, vorzugsweise 10° bis 20°, vorzugsweise 15°,
einschließt.

5. Mischvorrichtung (1) nach einem der vorhergehenden Ansprüche, wobei das Verwirbelungselement (9) angeordnet und ausgebildet ist, um entlang der Längsachse (L) einen gegenläufigen Doppeldrall in dem Gasstrom, vorzugsweise mit anteilig homogener Aufteilung des Gasstroms, zu erzeugen.

6. Mischvorrichtung (1) nach einem der vorhergehenden Ansprüche, wobei das Verwirbelungselement (9) in einer Querschnittsebene, auf der die Längsachse (L) senkrecht steht, die Form eines - insbesondere abgerundeten - V oder eines - insbesondere abgerundeten - W aufweist.

7. Mischvorrichtung (1) nach einem der vorhergehenden Ansprüche, wobei das Strömungsgehäuse (3) im Bereich der Einlassöffnung (7) mindestens ein Leitblech (25) aufweist, insbesondere zwei sich senkrecht zur Längsachse (L) gegenüberliegende Leitbleche (25), wobei optional das mindestens einen Leitblech (25)
- einteilig mit dem Verwirbelungselement (9) ausgebildet ist, oder
- mehrteilig mit dem Verwirbelungselement (9) ausgebildet ist, und/oder
- derart ausgebildet ist, dass es einen effektiven Einlassquerschnitt für den Gasstrom in Richtung der Längsachse (L) konstant hält oder verengt.

8. Mischvorrichtung (1) nach einem der vorhergehenden Ansprüche, wobei das Strömungsgehäuse (3) mindestens ein Abstandselement (31) aufweist, das angeordnet und eingerichtet ist, um das Verwirbelungselement (9) von einer Umfangswandung (17) des Strömungsgehäuses (3) beabstandet zu halten, vorzugsweise eine Mehrzahl von Abstandselementen (31).

9. Mischvorrichtung (1) nach Anspruch 8, wobei das mindestens eine Abstandselement (31) als Abstandspin oder als Abstandsbolzen ausgebildet ist.

10. Mischvorrichtung (1) nach einem der vorhergehenden Ansprüche, wobei das Strömungsgehäuse (3)
- eine Umfangswandung (17) und eine erste Stirnseite (19) aufweist, wobei
- die Einlassöffnung (7) an der Umfangswandung (17) als der Einlasswandung (5) und die mindestens eine Dosiervorrichtung (11) an der ersten Stirnseite (19) angeordnet ist.

11. Mischvorrichtung (1) nach einem der vorhergehenden Ansprüche, wobei die Mischvorrichtung (1) zwei Dosiervorrichtungen (11) oder drei Dosiervorrichtungen (11) aufweist.

12. Mischvorrichtung (1) nach einem der vorhergehenden Ansprüche, wobei das Strömungsgehäuse (3) im Bereich der Einlassöffnung (7) mindestens ein Strömungsausrichtungselement (33) aufweist, vorzugsweise mindestens zwei Strömungsleitplatten (35), die optional in einer zur Einströmrichtung (SR) senkrechten Querschnittsebene parallel oder orthogonal zueinander angeordnet sind.

13. Abgaspfad (13) für eine Brennkraftmaschine (15), mit mindestens einer Mischvorrichtung (1) nach einem der Ansprüche 1 bis 12.

14. Brennkraftmaschine (15) mit einer Mischvorrichtung (1) nach einem der Ansprüche 1 bis 12, oder mit einem Abgaspfad (13) nach Anspruch 13.
